# EUROPEAN PATENT APPLICATION

(11) **EP 2 599 536 A1**
(43) Date of publication of application: **05.06.2013**
(21) Application number: 11191172.3
(22) Date of filing: 29.11.2011
(51) Int. Cl.: B01D 53/14, B01D 19/00, F23J 15/00

(54) **Method for depleting an exhaust gas stream in gaseous acid**

(71) Applicant: Nederlandse Organisatie voor Toegepast -Natuurwetenschappelijk Onderzoek TNO, 2628 VK Delft (NL)
(72) Inventor: The designation of the inventor has not yet been filed
(74) Representative: Jansen, Cornelis Marinus

(57) **Abstract**

A method for depleting an exhaust gas stream in one or more gaseous acid compounds is described.

The method comprises the steps of:
i) combusting fuel (10), thereby obtaining a stream of exhaust gas (8) comprising one or more gaseous acid compounds;
ii) contacting said stream of exhaust gas comprising one or more gaseous acid compounds with an absorbent solution (4) lean in said one or more gaseous acid compounds, thereby obtaining an absorbent solution (11) rich in said one or more gaseous acid compounds and a gas stream depleted in said one or more gaseous acid compounds;
iii) subjecting at least part of the absorbent solution rich in said one or more gaseous acid compounds to a thermal stripping step at a temperature of 90 °C or less, thereby obtaining an absorbent solution (1) semi-lean in said one or more gaseous acid compounds;
iv) subjecting at least part of the absorbent solution semi-lean in said one or more gaseous acid compounds to an air stripping step, thereby obtaining an absorbent solution lean in said one or more gaseous acid compounds and a stream of air (5) rich in said one or more gaseous acid compounds;
v) recycling at least part of the stream of air rich in said one or more gaseous acid compounds to combustion step i); and
vi) recycling at least part of the absorbent solution lean in said one or more gaseous acid compounds to the contacting step ii),
wherein the solvent in said absorbent solution is non-volatile.

## Description

The invention is directed to a method for depleting an exhaust gas stream in one or more gaseous acid compounds.

Nowadays it is a common viewpoint that carbon dioxide released into the atmosphere plays a major role in global climate change. Hence, the reduction of carbon dioxide emissions from fossil fuel combustion and other sources has been drawing interest as a primary means of mitigating global warming. Carbon dioxide capture involves the separation of carbon dioxide from an effluent stream after which it can be compressed to a liquid or dense gas or supercritical state for transportation. It may then be injected into geological reservoirs (*e.g*. oil and gas fields, or deep saline aquifers), where the geological structure and processes are expected to store the carbon dioxide.

A major part of carbon dioxide emissions stems from the electricity sector, primarily from coal-fired power plants. A wide variety of industrial facilities also emit carbon dioxide as a by- or co-product of the industrial processes inherent to their industry, such as ethanol fermentation, oil and gas refining, chemical (including ethylene and ethylene oxide) production, hydrogen production, as well as other such as pulp and paper, iron and steel, ammonia and fertiliser, and cement manufacturing. Carbon dioxide in exhaust streams is present to various extents, at various temperatures and pressures, and with various other constituents (including NOₓ, SO₂).

There are commercially available carbon dioxide capture technologies that are currently being used in various industrial applications and being tested for power plant capture in pilot and demonstration projects. However, these technologies are still not widely used, primarily because they either have not been demonstrated at the scale necessary for power plant application, or they would not be cost effective.

Post-combustion carbon dioxide capture offers the greatest near-term potential for significantly reducing carbon dioxide emissions since these technologies can be retrofitted to the existing fleet of coal-fired power plants, which will likely produce the bulk of coal-fired carbon dioxide emissions for the foreseeable future. Post-combustion carbon dioxide capture involves the separation of carbon dioxide from the combustion flue gas, purification, and compression in preparation for geological storage or beneficial use such as enhanced oil recovery. It is primarily applicable to conventional coal-fired, oil-fired or gas-fired power plants, but could also be applicable to integrated gasification combined cycle and natural gas combined cycle flue gas capture.

In a typical thermal power plant, fuel is burnt with air in a boiler to produce steam that drives a turbine/generator to produce electricity. Flue gas from the boiler consists mostly of nitrogen, water vapour and carbon dioxide. Separating carbon dioxide from this flue gas is challenging for several reasons: a high volume of gas must be treated, the carbon dioxide is dilute, the flue gas is at atmospheric pressure, trace impurities (such as particular matter, sulphur oxides, nitrogen oxides, *etc*.) and oxygen can degrade chemical scrubbing agents, and compressing captured carbon dioxide from near atmospheric pressure to pipeline pressure requires a large auxiliary power load.

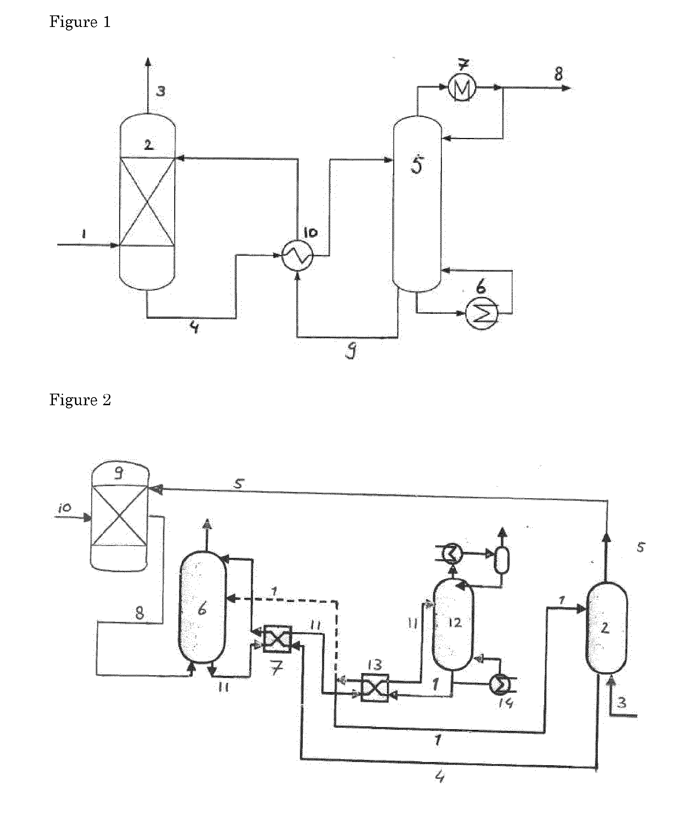

An embodiment of a conventional regenerative absorption/stripping concept for carbon dioxide removal from gaseous streams is schematically shown in the simplified flow diagram in figure 1. In the absorption stage, the flue gas to be treated 1 containing the carbon dioxide to be removed, is brought into contact with the chosen absorbent solution in an absorber 2, under conditions of pressure and temperature such that the absorbent solution removes the desired amount of carbon dioxide. The purified gas 3 emerges at the top of the absorber 2. At the bottom of the absorber 2, the solution enriched with carbon dioxide (*viz*. the "rich solvent") 4 is drawn off and pre-heated by heat exchanger 10 before entering the stripper 5, where the rich solvent is regenerated at a temperature of typically 100-120 °C and at pressures near the atmospheric pressure. Heat is supplied to the reboiler 6 using steam to maintain regeneration conditions, at which the solvent is kept at its boiling point. Some of the water in the solvent is turned into steam, which promotes stripping by reducing the carbon dioxide partial pressure. Steam is recovered in the condenser 7 and fed back to the stripper 5, after which the produced carbon dioxide gas 8 leaves the condenser to the compression stage. At the bottom of the stripper 5, the hot regenerated solution (*viz*. the "lean solvent") 9 leaves the stripper column and is recycled back to the absorber 2 via the rich/lean heat exchanger 10.

It has been shown that aqueous alkanolamines, such as aqueous monoethanolamine (MEA), can be successfully applied in absorption and stripping processes for the capture of acid gases (such as carbon dioxide and hydrogen sulphide) from flue gas, natural gas, synthesis gas and other gases. Unfortunately, a large quantity of energy is required to regenerate the MEA solvent. This would, for instance, considerably reduce the net efficiency of a power plant. Typically, the rich solvent is thermally regenerated in a packed column at high temperatures of 100-120 °C. This leads to a thermal energy penalty because the solvent has to be heated in the reboiler at elevated temperatures for maintaining it at boiling conditions to reduce the carbon dioxide partial pressure. The high temperature also results in the degradation of the absorption solvent, thereby increasing the costs of solvent regeneration, reclaiming and make-up.

In addition, typical amine solution concentrations are limited by viscosity and corrosion. Therefore, current amine systems use a solution that is between 20 and 30 % amine with the balance being water. Although the 70 to 80 % water present in the solution helps control the solvent temperature during the exothermic absorption, the water, with its high heat capacity, necessitates significant amounts of sensible heating and stripping energy upon regeneration. Furthermore, it has been proven difficult to remove carbon dioxide from exhaust gas streams that only have a low concentration of carbon dioxide (such as exhaust gases from natural gas fired power plants), because this requires a very low carbon dioxide loading of the lean solvent after regeneration. Reducing the carbon dioxide loading of the lean solvent normally requires elevated temperatures in the reboiler and hence more energy.

In view of the above, there are technological challenges in improving the post-combustion carbon dioxide processes. In particular, much attention has been paid trying to decrease the high-energy requirements to regenerate the rich solvent. Many of these efforts focus on alternative solvents with increased capacity to absorb carbon dioxide and lower heats of reaction: promoted monoethanolamine, tertiary amines, promoted potassium carbonate, amino acid salts, *etc*. Other improvements focus on the use of innovative process configurations, such as split flow or multi-pressure strippers, and energy integration with the power plant.

Objective of the invention is to improve the energy efficiency of solvent regeneration in a method for capturing one or more gaseous acid compounds from a combustion exhaust gas stream.

Further objective of the invention is to provide a method that is able to remove carbon dioxide from gas streams with a low concentration of carbon dioxide.

Yet a further objective of the invention is to lower the desorption temperature in solvent regeneration, thereby reducing the energy requirements for recovery of the solvent as well as reducing solvent degradation.

The inventors surprisingly found that one or more of these objectives can, at least in part, be met by employing a secondary air stripper.

Accordingly, in a first aspect the invention is directed to a method for depleting an exhaust gas stream in one or more gaseous acid compounds comprising the steps of:
i) combusting fuel, thereby obtaining a stream of exhaust gas comprising one or more gaseous acid compounds;
ii) contacting said stream of exhaust gas comprising one or more gaseous acid compounds with an absorbent solution lean in said one or more gaseous acid compounds, thereby obtaining an absorbent solution rich in said one or more gaseous acid compounds and a gas stream depleted in said one or more gaseous acid compounds;
iii) subjecting at least part of the absorbent solution rich in said one or more gaseous acid compounds to a thermal stripping step at a temperature of 90 °C or less, thereby obtaining an absorbent solution semi-lean in said one or more gaseous acid compounds;
iv) subjecting at least part of the absorbent solution semi-lean in said one or more gaseous acid compounds to an air stripping step, thereby obtaining an absorbent solution lean in said one or more gaseous acid compounds and a stream of air rich in said one or more gaseous acid compounds;
v) recycling at least part of the stream of air rich in said one or more gaseous acid compounds to combustion step i); and
vi) recycling at least part of the absorbent solution lean in said one or more gaseous acid compounds to the contacting step ii),
   wherein the solvent in said absorbent solution is non-volatile.

In accordance with the invention, the absorption/desorption process involves an absorption step, a thermal stripping step, and an air stripping step. Since there is an additional air stripping step, the absorbent solution that leaves the thermal stripping step can still have a certain level of gaseous acid loading, thereby allowing a lowering of the operational temperature of the thermal stripping step.

The invention allows a lowering of the regeneration temperature in the reboiler to a temperature of 90 °C or less. This advantageously enables using waste heat, for instance from the combustion step, or lower grade steam for the absorbent regeneration. As a result, the energy which is required for stripping the one or more gaseous acid compounds from the absorbent solution is reduced and in turn the power output of the power plant can be increased. Moreover, degradation of the absorption solvent will be reduced because of the lower operation temperatures.

The gaseous acid loading of the absorbent solution leaving the thermal stripping step is further lowered in the secondary air stripping step, yielding a lean absorbent solution with very low gaseous acid loading capable of absorbing low concentrations of gaseous acid compounds in the absorption step.

In addition, the air stripping step generates a stream of air which is rich in gaseous acid compounds. In accordance with the invention, this stream of rich air is recycled to the combustion step. This recycle increases the content of gaseous acid compounds in the combustion exhaust gas. This is advantageous, because it allows for a higher gaseous acid loading of the lean absorbent solution.

The term "non-volatile" as used in this application is meant to refer to materials which exhibit a vapour pressure of 0.2 mm Hg or less at 25 °C and 1 atm.

The term "stripping" as used in this application is meant to refer to reducing the content of one or more components. Hence, stripping one or more gaseous acid compounds from a solution, for instance, refers to reducing the content of the one or more gaseous acid compounds in said solution.

The terms "lean", "semi-lean" and "rich" as used in this application are not meant as precise indicators of the amount of gaseous acid compounds in the gas or in the solution, but only indicate the relative amount of the gaseous acid compounds therein. For example, a rich solution contains more gaseous acid compound than a semi-lean solution, which in turn contains more gaseous acid compound that a lean solution.

In combustion step i) a fuel is combusted to produce an exhaust gas. The fuel can comprise a fossil fuel. Preferably, the fuel comprises natural gas. More preferably, the fuel is natural gas.

One or more gaseous acid compounds are comprised in the exhaust gas. The one or more gaseous acid compounds can comprise one or more selected from the group consisting of CO₂, SO₂, SO₃, NO₂, HF, H₂S, and HCl. In a preferred embodiment, the one or more gaseous acid compounds comprise carbon dioxide.

The exhaust gas stream of the combustion step can comprise an amount of gaseous acid compounds (such as carbon dioxide) of 15 vol.% or less, such as 10 vol.% or less, 8 vol.% or less, preferably 5 vol.% or less, such as in the range of 0.5-5 vol.%. The exhaust gas stream typically comprises further components such as water, nitrogen and/or oxygen.

The exhaust gas is contacted with an absorbent solution that is lean in the one or more gaseous acid compounds. The solvent in the absorbent solution is non-volatile. Accordingly, any solvent losses in the thermal stripper and in the air stripper are avoided (or at least reduced). Hence, the solvent preferably comprises water. In a preferred embodiment, the absorbent solution is an aqueous solution.

The absorbent solution can suitable comprise one or more selected from amino acid salts, non-volatile amines, inorganic salts, and the like.

As amino salts, all conventional water-soluble salts of amino acids can be used. Amino acids are defined herein as all organic substances which contain one or more amine groups and one or more carboxylic acid groups or sulfonic acid groups. The acid groups can be bound to one and the same atom of the organic substance (as is the case with the naturally occurring amino acids) or to different atoms. Preferably, amino acids of which the amine group is removed from the acid group by at least two or more atoms, such as carbon atoms, are used.

Suitable amino acids can be subdivided into amino acids not having an internal steric hindrance (with respect to the accessibility for the amine group) and the amino acids having an internal steric hindrance. To remove only CO₂, the amino acids without steric hindrance are preferably used, because they react with CO₂ to form a carbamate and a zwitterion of the amino acid. The carbamate may subsequently undergo hydrolysis to form an amino acid and a bicarbonate. Examples of non-sterically hindered amino acids according to the invention are taurine, methyl taurine, methyl-α-aminopropionic acid, N-(β-ethoxy)taurine and N-(β-aminoethyl)taurine, as well as all other amino acids described in US-A-3 042 483, which publication is inserted herein by reference, as far as the description of these compounds is concerned.

Examples of sterically hindered amino acids include the naturally occurring amino acids (the amino acids which are part of naturally occurring proteins), in which the accessibility of the amino group is limited by the presence of a carboxylic acid group at the same carbon atom. Examples thereof include alanine and glycine and derivatives of alanine and glycine, such as *N*-methyl alanine and dimethyl glycine. Aqueous solutions with such amino acids are commercially available from Sigma-Aldrich under the tradenames Alkazyd N, Alkazyd M (*N*-methyl alanine) and Alkazyd di-K (dimethyl glycine). It is also possible to use amino acids containing several amine groups per molecule, such asparagine, glutamine, lysine and histidine. The sterically hindered amino acids or tertiary amino acids and their salts can for instance absorb carbon dioxide in a ratio of 1 mol carbon dioxide per mol of amino group.

Examples of non-volatile amines include diethylenetriamine, triethylenetetramine, mixtures of ethyleneamines (such as heavy polyamine X commercially available from The Dow Chemical Company), partially neutralised amines (such as the mixture of piperazine and hydrogen chloride), and mixtures thereof.

Examples of inorganic salts include potassium carbonate, sodium carbonate, potassium phosphate, sodium phosphate, and mixtures thereof.

By contacting the exhaust gas stream with lean absorbent solution, a rich absorbent solution and a gas stream depleted in the one or more gaseous acid compounds are obtained. The depleted gas stream may be discharged to the environment.

At least part (and preferably all) of the rich absorbent solution is subjected to a thermal stripping step where at least part of the one or more gaseous acid compounds are stripped from the absorbent solution, yielding a semi-lean absorbent solution and stripped gaseous acid compounds. The stripped gaseous acid compounds may, for instance, be directed to a compression system where the gaseous acid compounds are compressed and stored.

In an embodiment, the thermal stripping step is performed at a temperature of 90 °C or less. Preferably, the thermal stripping process of performed at a temperature of 80 °C or less, such as in the temperature range of 60-80 °C.

In a suitable embodiment, from the total gaseous acid compounds that are desorbed in both thermal and air strippers, 50 wt.% or more is desorbed in the thermal stripper and preferably 60 wt.% or more.

At least part (and preferably all) of the semi-lean absorbent solution is subjected to an air stripping step, where remaining gaseous acid compounds are stripped from the absorbent solution.

It is advantageous if the air used in the air stripping step is pre-heated. The use of pre-heated air increases the amount of gaseous acid compounds that are stripped from the semi-lean absorbent solution. The air may, for instance, be pre-heated to a temperature of 90 °C or more, such as in the range of 80-110 °C. This task may be performed by possible existing pre-heaters in the proximity, such as pre-heaters in a power plant.

In an embodiment, the air is pre-heated with the stream of air rich in the one or more gaseous acid compounds that leaves the air stripper. Additionally, or alternatively, the air may be pre-heated by flue gas originating from the combustion step.

The air stripping step can be performed in various stripper types, such as tray columns, packed columns or membrane contactor stripper types. The air used in the air stripping step may be humidified in order to increase the amount of acid gas removal. The air may be humidified up to saturation, but is preferably at a humidity level below saturation.

Apart from a lean absorbent solution, the air stripping step yields a stream of air rich in the one or more gaseous acid compounds. This stream of rich air may comprise an amount of water. Part of this water may be used in different parts of the process. For instance, increasing the amount of water in the air can help in NOₓ reduction during the combustion step. Therefore, it is beneficial not to condense all the water.

At least part (and preferably all) of the stream of rich air is recycled to the combustion step, where it *inter alia* serves to increase the concentration of the one or more gaseous acid compounds in the exhaust gas.

At least part (and preferably all) of the regenerated lean absorbent solution is recycled to contacting step ii) in order to absorb one or more gaseous acid compounds from the exhaust gas stemming from the combustion step.

A simplified and exemplary embodiment of the method of the invention is schematically depicted in figure 2. As shown in the embodiment of figure 2, a semi-lean absorbent solution 1 is treated in the air stripper 2 with air 3 resulting in a lean absorbent solution 4 and a stream of air and gaseous acid compounds 5. The lean absorbent solution 4 is sent back to the absorber 6 via heat exchanger 7. In the absorber 6 it is used to absorb gaseous acid compounds from exhaust gas stream 8. The mixture of air and gaseous acid compounds 5 is sent back to the combustion step 9 and used to combust fuel 10. Exhaust gas stream 8 with an increased concentration of gaseous acid compound is entered into absorber 6. Absorbent solution 11, which is rich in gaseous acid compounds, leaves the absorber 6 and is introduced into thermal stripper 12 via heat exchangers 7 and 13. In thermal stripper 12, rich absorbent solution 11 is regenerated to the semi-lean absorbent solution 1. Due to the presence of the air stripper 2, the gaseous acid loading of the semi-lean absorbent solution 1 can be left higher at the exit of the thermal stripper 12. Accordingly, the temperature in the reboiler 14 (which is operatively linked with thermal stripper 12) can be lowered and the energy required to strip the gaseous acid compounds can be reduced. Semi-lean absorbent solution 1 is introduced to the air stripper 2 via heat exchanger 13. The air-stripping creates a lean absorbent solution 4 with a lower loading of gaseous acid compounds hence making the total flow of absorbent solution needed lower.

In a special embodiment of the invention, a part of the absorbent solution semi-lean in said one or more gaseous acid compounds obtained in step iii) is recycled to contacting step ii). This optional embodiment is also shown in figure 2, wherein a part of the semi-lean absorbent solution 1 exiting the thermal stripper 12 is optionally directed back to the absorber 6 (dashed line). This split-flow option gives flexibility to the configuration by allowing tuning and optimisation of different variables in the process.

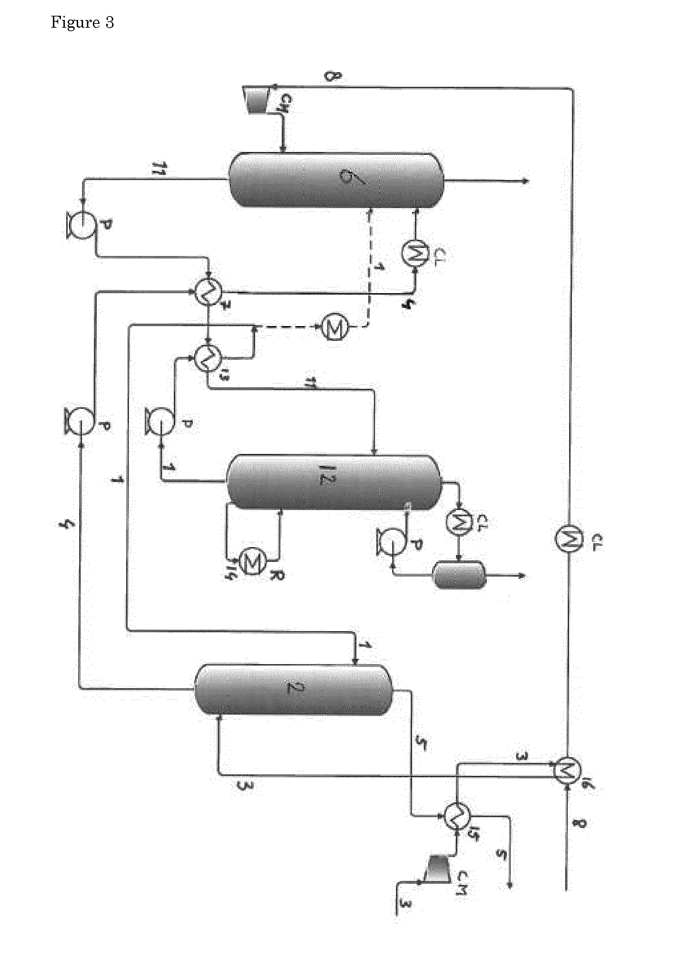

A simplified and schematic example of an embodiment wherein the air is pre-heated by the stream of rich air originating from the air stripper and by flue gas originating from the combustion step is shown in figure 3. In figure 3, air 3 entering the air stripper 2 (preferably humidified air) is preheated, first by the stream of rich air 5 that originated from the air stripper 2 in heat exchanger 15, and then by flue gas 8 originating from the combustion step 9 (not shown) in heat exchanger 16. Furthermore, in figure 3 "CL" indicates a cooler, "P" indicates a pump, "R" indicates a reboiler, and CM" indicates a compressor.

The invention will now be further elucidated by means of the following examples, which are not intended to limit the invention in any way.

### Example

ASPEN Plus® 7.2 has been used to simulate the performance of the configuration of the invention and to assess its profitability. A simulation was performed on the carbon dioxide capture of a natural gas fired power plant.

It is assumed that the carbon dioxide capture plant is connected to a natural gas fired power plant with a flue gas that contains about 5 vol.% of carbon dioxide (typical concentrations are about 4 %). The initial flue gas considered had a flow of 655 kg/s and the composition is detailed in Table 1. The solvent used for the absorption/desorption cycle was 30 wt.% MDEA (methyl dimethanol amine). By modifying the flow scheme, the solvent was modelled as non-volatile. The lean-rich heat exchanger was designed for a ΔT_{cold-side} of 6 °C.

**Table 1. Flue gas composition of the reference case for a natural gas fired power plant**

| Component | [vol.%] |
|---|---|
| H₂O | 4.7 |
| CO₂ | 5.2 |
| N₂ | 83.8 |
| O₂ | 6.3 |

First of all, a conventional, standard absorber/thermal stripper system was modeled to provide a reference. The aim was to perform the stripping with maximum reboiler temperature of 90 °C. By using only a thermal stripper it was not possible to achieve this goal. With a stripper pressure of 1.15 bar and 90 °C, the loading of the lean solvent was not low enough to achieve 90 % capture in the absorber. The lowest temperature in which that was achievable was 93 °C. With this configuration, the specific reboiler duty and lean-loading flow corresponded to 3.05 GJ/ton carbon dioxide and 2450 kg/s, respectively.

When a secondary air stripper was added, the flue gas flow was increased to 708 kg/s and the carbon dioxide concentration to about 10 vol.% (detailed flue gas composition used in the simulation is shown in Table 2). This flow and concentration are caused by the process of the invention.

**Table 2. Flue gas composition assuming that the air used in the combustor contains carbon dioxide from the secondary air stripper (composition after condenser)**

| Component | [vol.%] |
|---|---|
| H₂O | 4.5 |
| CO₂ | 10.0 |
| N₂ | 79.6 |
| O₂ | 5.9 |

The following conditions were applied for the inventive configuration:
1) The amount of carbon dioxide vented to the atmosphere was the same as for the reference case. For example, if the initial aim was 90 % capture of the flue gas that contains 50 kg/s carbon dioxide, the resulting vent gas would have 5 kg/s of carbon dioxide. The amount of carbon dioxide vented in the new situation (flue gas 100 kg/s carbon dioxide, because of the carbon dioxide re-circulation) should not be 90 % of the new flue gas concentration, but the required 5 kg/s of carbon dioxide.
2) The amount of carbon dioxide removed from the rich absorbent solution in the thermal stripper corresponded to the 90 % of the carbon dioxide of the original flue gas (in the example would be 45 kg/s carbon dioxide).

With these conditions, the amount of carbon dioxide captured and ready for compression and storage would be the same both in the inventive configuration as well as in the reference case.

The results showed that because it was not necessary to reduce the loading exiting the thermal stripper to values as low as in the reference case, the temperature of the reboiler could be set at 87 °C. The secondary air stripper could remove more carbon dioxide from the semi-lean absorbent solution, creating a lean absorbent solution that could absorb the required amount of carbon dioxide. The reboiler duty of the thermal stripper was reduced to 2.78 GJ/ton of carbon dioxide. Even though the total amount of carbon dioxide that the absorbent solution needed to capture in the absorber was higher in this case as compared to the reference, because the loading of the absorbent solution that arrived to the absorber was extra low (due to the effect of the air stripper), the flow of absorbent solution remained the same. A comparison of the results of both cases is shown in Table 3.

**Table 3. Results summary of the reference configuration and the inventive configuration**

| | Thermal stripper reference (∼ 5 % CO₂ in flue gas) | Thermal and air stripper (∼ 10 % CO₂ in flue gas) |
|---|---|---|
| Reboiler temperature (°C) | 93 | 87 |
| Reboiler duty (GJ/ton CO₂) | 3.05 | 2.78 |
| Solvent flow (kg/s) | 2450 | 2450 |

The examples show that the addition of an air stripper has energetic advantages in the carbon dioxide capture process for a natural gas fired power plant. The specific reboiler duty is reduced with about 9 % and the reboiler temperature can be lowered to less than 90 °C (simulated temperature of 87 °C), for which low quality energy (waste heat or low pressure steam) can be used. Although the inventive configuration has the apparent disadvantage of an increase in capital cost of the plant due to the need of an extra stripper and larger absorber and thermal stripper, the main cost in today's carbon dioxide capture plants are the operating costs (about 70 %) thereby making its reduction normally more profitable at the expense of capital investment.

## Claims

1. Method for depleting an exhaust gas stream in one or more gaseous acid compounds comprising the steps of:
i) combusting fuel, thereby obtaining a stream of exhaust gas comprising one or more gaseous acid compounds;
ii) contacting said stream of exhaust gas comprising one or more gaseous acid compounds with an absorbent solution lean in said one or more gaseous acid compounds, thereby obtaining an absorbent solution rich in said one or more gaseous acid compounds and a gas stream depleted in said one or more gaseous acid compounds;
iii) subjecting at least part of the absorbent solution rich in said one or more gaseous acid compounds to a thermal stripping step at a temperature of 90 °C or less, thereby obtaining an absorbent solution semi-lean in said one or more gaseous acid compounds;
iv) subjecting at least part of the absorbent solution semi-lean in said one or more gaseous acid compounds to an air stripping step, thereby obtaining an absorbent solution lean in said one or more gaseous acid compounds and a stream of air rich in said one or more gaseous acid compounds;
v) recycling at least part of the stream of air rich in said one or more gaseous acid compounds to combustion step i); and
vi) recycling at least part of the absorbent solution lean in said one or more gaseous acid compounds to the contacting step ii),
wherein the solvent in said absorbent solution is non-volatile.

2. Method according to claim 1, wherein said absorbent solution is an aqueous solution.

3. Method according to claim 1 or 2, wherein a part of the absorbent solution semi-lean in said one or more gaseous acid compounds obtained in step iii) is recycled to contacting step ii).

4. Method according to any one of claims 1-3, wherein the one or more gaseous acid compounds comprise one or more selected from the group consisting of CO₂, SO₂, SO₃, NO₂, HF, H₂S, and HCl, preferably the one or more gaseous acid compounds comprise CO₂.

5. Method according to any one of claims 1-4, wherein the fuel comprises a fossil fuel, preferably the fuel comprises natural gas, more preferably the fuel is natural gas.

6. Method according to any one of claims 1-5, wherein the content of gaseous acid compounds in the stream of exhaust gas is 15 vol. % or less, such as 8 vol.% or less, preferably 5 vol.% or less, such as in the range of 0.5-5 vol.%.

7. Method according to any one of claims 1-6, wherein the thermal stripping step is performed at a temperature of 90 °C or less, preferably 80 °C or less.

8. Method according to any one of claims 1-7, wherein from the total gaseous acid compounds that are desorbed in the thermal stripping step and the air stripping step, 50 wt.% or more is desorbed in the thermal stripping step, preferably 60 wt.% or more.

9. Method according to any one of claims 1-8, wherein air used in the air stripping step iv) is pre-heated, preferably to a temperature of 90 °C or more, such as in the range of 80-110 °C.
